(19) Europäisches Patentamt
European Patent Office
Office européen des brevets

(11) EP 2 905 307 B1

(12) **EUROPEAN PATENT SPECIFICATION**

(45) Date of publication and mention of the grant of the patent:
**05.07.2017 Bulletin 2017/27**

(51) Int Cl.:
***C08L 9/00*** *(2006.01)* ***C08L 9/06*** *(2006.01)*
***C08L 7/00*** *(2006.01)* ***B60C 1/00*** *(2006.01)*
*C08L 57/02* *(2006.01)* *C08L 61/06* *(2006.01)*

(21) Application number: **15153884.0**

(22) Date of filing: **05.02.2015**

(54) **Partially hydrogenated phenolic resin, rubber composition and pneumatic tire**

Teilweise hydriertes Phenolharz, Kautschukzusammensetzung und Luftreifen

Résine phénolique partiellement hydrogénée, composition de caoutchouc et pneu

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.02.2014 JP 2014021322**

(43) Date of publication of application:
**12.08.2015 Bulletin 2015/33**

(73) Proprietor: **SUMITOMO RUBBER INDUSTRIES, LTD.**
**Kobe-shi, Hyogo-ken, 651-0072 (JP)**

(72) Inventors:
- **Washizu, Kensuke**
  **Kobe-shi Hyogo 651-0072 (JP)**
- **Nakajima, Hiroki**
  **Kobe-shi Hyogo 651-0072 (JP)**

(74) Representative: **Manitz Finsterwald Patentanwälte PartmbB**
**Martin-Greif-Strasse 1**
**80336 München (DE)**

(56) References cited:
**EP-A1- 2 270 088 WO-A1-2013/105455**

- **DATABASE WPI Week 200855 Thomson Scientific, London, GB; AN 2008-J45856 XP002740154, & JP 2008 174696 A (BRIDGESTONE CORP) 31 July 2008 (2008-07-31)**
- **DATABASE WPI Week 200943 Thomson Scientific, London, GB; AN 2009-K73127 XP002740155, & JP 2009 138025 A (BRIDGESTONE CORP) 25 June 2009 (2009-06-25)**
- **DATABASE WPI Week 200669 Thomson Scientific, London, GB; AN 2006-664110 XP002740156, & JP 2006 249188 A (YOKOHAMA RUBBER CO LTD) 21 September 2006 (2006-09-21)**
- **DATABASE WPI Week 200517 Thomson Scientific, London, GB; AN 2005-156872 XP002743509, & JP 2005 041946 A (YOKOHAMA RUBBER CO LTD) 17 February 2005 (2005-02-17)**
- **DATABASE WPI Week 200669 Thomson Scientific, London, GB; AN 2006-664110 XP002743510, & JP 2006 249188 A (YOKOHAMA RUBBER CO LTD) 21 September 2006 (2006-09-21)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 905 307 B1

## Description

TECHNICAL FIELD

The present invention relates to a partially hydrogenated phenolic resin, a rubber composition comprising the resin and a pneumatic tire produced using the rubber composition.

BACKGROUND OF THE INVENTION

Recently, there is an increasing demand for a pneumatic tire having high-speed moving performance in response to improvement in car performance and developments in paving roads and networking express highways. The high-speed moving performance makes it possible to run a car more accurately and safely at a higher speed. In particular, grip performance represented by an accelerating or braking performance is an important property required.

In order to obtain a higher grip performance as compared with conventional tires, there was a method of using, for a rubber composition for a tire tread, a styrene-butadiene copolymer rubber having a high styrene content which is a rubber having a high glass transition temperature. However, in this method, improvement of grip performance can be achieved but there is a disadvantage that as a rubber temperature increases by running a car, a tan$\delta$ value decreases and grip performance deteriorates abruptly. Further, there was a method of increasing a tan$\delta$ value of a rubber composition by using a rubber composition comprising high contents of a process oil and a carbon black. However, in this method, in exchange for improvement of grip performance, breaking resistance and abrasion resistance deteriorate remarkably, and therefore, there is a disadvantage that there is a natural limit in blending a process oil and a carbon black in high contents. Thus, it is difficult to obtain a high grip performance level as demanded.

JP 2005-248056 A discloses a rubber composition prepared by blending a given amount of a specific rosin ester resin and exhibiting excellent grip performance and abrasion resistance.

WO 2013/105455 A1 relates to a method for manufacturing an electronic component using a pressure-sensitive adhesive sheet, wherein the adhesive sheet comprises a terpene phenol resin which has a hydroxyl value of 50 to 250 and a degree of hydrogenation of 30 to 100%.

JP 2008-174,696 is directed to a rubber composition for pneumatic tires, in particular to tread rubbers of high speed tires, wherein the rubber composition comprises a resin based on aromatic compounds having a degree of hydrogenation of 60% or more.

SUMMARY OF THE INVENTION

It is an object of the present invention to provide a novel partially hydrogenated phenolic resin, a rubber composition comprising the resin and exhibiting excellent grip performance and abrasion resistance, and a pneumatic tire produced using the rubber composition.

The inventors of the present invention have made extensive study and, as a result, have found that the above-mentioned problem can be solved by using a specific partially hydrogenated phenolic resin being prepared by selectively hydrogenating double bonds other than those on aromatic rings of a phenolic resin and, then, have made further studies to complete the present invention.

Namely, the present invention relates to:

[1] a partially hydrogenated phenolic resin, said resin being prepared by selectively hydrogenating double bonds other than those on aromatic rings of a phenolic resin, and having a hydrogenation ratio of the double bonds of from 30 to 100% and a hydroxyl value of from 30 to 500 mgKOH/g,
[2] the partially hydrogenated phenolic resin described above in [1], wherein the phenolic resin is a copolymer of (a) a phenolic compound and at least one of (b1) an acetylene hydrocarbon and (b2) a terpene compound,
[3] a rubber composition comprising the partially hydrogenated phenolic resin described above in [1] or [2],
[4] a rubber composition comprising 1 to 100 parts by mass, preferably 3 to 90 parts by mass, further preferably 5 to 80 parts by mass, further preferably 10 to 50 parts by mass, further preferably 20 to 40 parts by mass of the partially hydrogenated phenolic resin described above in [1] or [2] based on 100 parts by mass of a diene rubber component comprising not less than 60% by mass, preferably not less than 80% by mass, more preferably not less than 90% by mass, further preferably 100% by mass of a styrene-butadiene rubber,
[5] the rubber composition described above in [4], further comprising 30 to 150 parts by mass, preferably 40 to 100 parts by mass of a carbon black, and
[6] a tire having a tire tread produced using the rubber composition of any one of [3] to [5] above.

According to the present invention, a rubber composition achieving that grip performance is compatible with

abrasion resistance, especially a rubber composition for a tire can be provided by using a specific partially hydrogenated phenolic resin.

DETAILED DESCRIPTION

< Partially hydrogenated phenolic resin >

The "partially hydrogenated phenolic resin" of the present invention is explained below. In the "partially hydrogenated phenolic resin", a "phenolic resin" is a compound obtained by copolymerizing (a) a phenolic compound and at least one of (b1) an acetylene hydrocarbon and (b2) a terpene compound by a usual method. Here, the copolymer can be prepared by adding each starting material dropwise in any order to an organic solvent, for example, toluene in the presence of a catalyst such as $BF_3$ and then carrying out reaction at a given temperature for a given period of time.

(Phenolic compound (a))

The phenolic compound is not limited particularly as far as it is a compound having phenolic hydroxyl group (phenols). Specifically, examples thereof include phenolic compounds such as phenol, an alkylphenol, an alkoxyphenol and an unsaturated hydrocarbon group-containing phenol, naphthol compounds such as a naphthol, an alkylnaphthol, an alkoxynaphthol and an unsaturated hydrocarbon group-containing naphthol, and the like. In this case, the number of carbons of alkyl or alkoxy is preferably from 1 to 10, more preferably from 1 to 5. In addition, the number of carbons of unsaturated hydrocarbon group is preferably from 2 to 10, more preferably from 2 to 5. In the phenolic compounds, a substituting position of the hydroxyl group may be any of o-, m- and p-positions, and the number of substitutions by hydroxyl group also may be one or plural.

Examples of the alkylphenol include a methylphenol, an ethylphenol, a butylphenol, a t-butylphenol, an octylphenol, a nonylphenol, a decylphenol, a dinonylphenol and the like. These may be substituted at any of o-, m- and p-positions. Among these, a t-butylphenol and further p-t-butylphenol are preferred.

With respect to alkylnaphthol, there are exemplified examples similar to the above-mentioned alkylphenols, in which phenol portion of alkylphenol has been replaced by naphthol. Here, naphthol includes either of α-naphthol or β-naphthol (hereinafter the same).

Examples of the alkoxyphenol include compounds obtained by replacing alkyl group or groups of the above-mentioned alkylphenols with corresponding alkoxy group or groups. The same is applied to the alkoxynaphthols.

Examples of the unsaturated hydrocarbon group-containing phenol include compounds having one hydroxyphenyl group in one molecule in which at least one of hydrogen atoms of the phenyl group has been replaced with an unsaturated hydrocarbon group. Examples of the unsaturated bond in the unsaturated hydrocarbon group include a double bond and a triple bond. Example of the unsaturated hydrocarbon group is an alkenyl group having 2 to 10 carbon atoms. Examples of the unsaturated hydrocarbon group-containing phenol include isopropenylphenol, butenylphenol and the like. The same is applied to the unsaturated hydrocarbon group-containing naphthol.

These phenolic compounds may be used alone or may be used in combination of two or more thereof.

(Acetylene hydrocarbon (b1))

The acetylene hydrocarbon (b1) includes compounds having one or a plurality of acyclic and/or cyclic C-C triple bonds in a molecule thereof. Among these, compounds having one triple bond are preferred. The number of carbons of the acetylene hydrocarbon is preferably from 2 to 10, more preferably from 2 to 5, particularly preferably 2 (namely specifically acetylene).

These acetylene compounds may be used alone or may be used in combination of two or more thereof.

(Terpene compound (b2))

The terpene compound (b2) is a hydrocarbon represented by the formula of $(C_5H_8)_n$ and an oxygen-containing derivative thereof. Examples thereof include compounds having, as a basic structure, terpene and being classified into monoterpene ($C_{10}H_{16}$), sesquiterpene ($C_{15}H_{24}$), diterpene ($C_{20}H_{32}$), and the like. The terpene compound is not limited particularly, but preferable when it is a cyclic unsaturated hydrocarbon or has no hydroxyl group.

Examples of the terpene compounds include α-pinene, β-pinene, 3-carene (δ-3-carene), dipentene, limonene, myrcene, alloocimene, ocimene, α-phellandrene, α-terpinene, γ-terpinene, terpinolene, 1,8-cineol, 1,4-cineol, α-terpineol, β-terpineol, γ-terpineol and the like. Among these, from the viewpoint that wet grip performance and breaking resistance can be improved in good balance, α-pinene, β-pinene, 3-carene (δ-3-carene), dipentene and limonene are preferred, and α-pinene and limonene are more preferred. Here, limonene includes any of d-form, 1-form and d/l-form.

These terpene compounds may be used alone or may be used in combination of two or more thereof.

(Phenolic resin)

In the present invention, the phenolic resin is a compound obtained by copolymerizing (a) the phenolic compound and at least one of (b1) the acetylene hydrocarbon (preferably acetylene) and (b2) the terpene compound (preferably limonene) by a usual method. Preferable examples thereof include compounds obtained by copolymerizing (a) the phenolic compound (preferably alkylphenol) and (b1) acetylene, compounds obtained by copolymerizing (a) the phenolic compound and (b2) limonene, and the like.

With respect to the phenolic resin, examples of the compounds obtained by copolymerizing (a) the phenolic compound and (b2) limonene include compounds represented by the following formula.

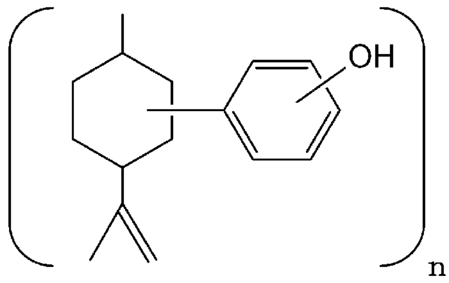

wherein n is an integer of 1 to 12.

Examples of the phenolic resin include "KORESIN" (available from BASF), "YS Resin TO125", "YS Polyster G125", "YS Polyster G150", "YS Polyster K125", "YS Polyster K140", "YS Polyster TH130", and "YS Polyster UH115" (available from YASUHARA CHEMICAL CO., LTD.), Sumilite Resin (trademark) PR50731 and Sumilite Resin (trademark) Durez19900 (available from Sumitomo Bakelite Co., Ltd.), and the like.

(Selective hydrogenation reaction)

The partially hydrogenated phenolic resin of the present invention can be prepared by a usual method by selectively hydrogenating double bonds other than those on aromatic rings in the above-mentioned phenolic resin. The hydrogenation can be performed by catalytic hydrogen reduction using, as a catalyst, a precious metal itself such as palladium, ruthenium, rhodium or nickel or the precious metal carried on a carrier such as activated carbon, activated alumina or diatomaceous earth.

An amount of the catalyst used is from 0.1 to 50% by mass, preferably from 0.2 to 20% by mass to the phenolic resin of a starting material. When the amount of the catalyst is less than 0.1% by mass, the hydrogenation reaction tends to be slow, and when more than 50% by mass, there is a possibility that even conjugated double bonds of aromatic rings of the phenolic resin are also hydrogenated and sufficient grip performance cannot be obtained. A pressure of hydrogen for the hydrogenation is usually from 5 to 200 $kg/cm^2$, preferably from 50 to 100 $kg/cm^2$. When the pressure is less than 5 $kg/cm^2$, the hydrogenation rate tends to be low, and when more than 200 $kg/cm^2$, there is a possibility that even conjugated double bonds of aromatic rings of the phenolic resin are also hydrogenated and sufficient grip performance cannot be obtained. A reaction temperature of the hydrogenation is usually from 10 to 200°C, preferably from 20 to 150°C. When the reaction temperature is lower than 10°C, the hydrogenation reaction tends to be slow, and when exceeding 150°C, there is a possibility that even conjugated double bonds of aromatic rings of the phenolic resin are also hydrogenated and sufficient grip performance cannot be obtained.

(Partially hydrogenated phenolic resin)

The thus obtained partially hydrogenated phenolic resin according to the present invention is one in which the double bonds other than those on aromatic rings have been hydrogenated selectively.

In the partially hydrogenated phenolic resin of the present invention, a hydrogenation ratio of the double bonds other than those on aromatic rings is preferably from 30 to 100%, particularly preferably not less than 50%. When the hydrogenation ratio is less than 30%, there is a tendency that abrasion resistance is not sufficient. The hydrogenation ratio is a value calculated using the following equation from each integrated value of peaks which are derived from non-aromatic double bonds and measured with $^1$H-NMR (proton NMR). Herein the hydrogenation ratio means a hydrogenation ratio of double bonds other than those on aromatic rings unless otherwise specified.

$$(\text{Hydrogenation ratio}) = \{(A\text{-}B)/A\}\times 100\ (\%)$$

A: Integrated value of peaks of non-aromatic double bonds before hydrogenation
B: Integrated value of peaks of non-aromatic double bonds after hydrogenation

In the partially hydrogenated phenolic resin of the present invention, a hydroxyl value (mgKOH/g) is preferably within a range from 30 to 500, particularly preferably from 50 to 400. When the hydroxyl value is less than 30, there is a possibility that sufficient grip performance cannot be obtained, and when exceeding 500, there is a possibility that tackiness is increased too much and processability is lowered.

In the partially hydrogenated phenolic resin of the present invention, a softening point of the resin is preferably from 30 to 180°C, more preferably from 40 to 160°C, further preferably from 50 to 150°C. When the softening point is lower than 30°C, productivity tends to be lowered, and when exceeding 180°C, there is a tendency that hardness is increased and sufficient grip performance cannot be obtained. The softening point of the resin is one specified in JIS K6220-1: 2001 and is a temperature at the time when the ball has dropped on a bottom plate in the measurement with the ring and ball softening point measuring device.

In the partially hydrogenated phenolic resin of the present invention, a weight average molecular weight (Mw) of the resin is not limited particularly, and is preferably from 300 to 3000, more preferably from 500 to 1500. When Mw is less than 300, there is a tendency that sufficient abrasion resistance cannot be obtained, and when exceeding 3000, there is a tendency that hardness increases, and sufficient grip performance and abrasion resistance cannot be obtained. Mw is a value in terms of standard polystyrene measured by a gel permeation chromatograph (GPC).

< Rubber composition >

The present invention relates to a rubber composition comprising the above-mentioned partially hydrogenated phenolic resin.

(Rubber component)

In the rubber composition of the present invention, the rubber component comprises a diene rubber, preferably consists of a diene rubber, or diene rubbers. Further, the rubber component is one comprising not less than 60% by mass of styrene-butadiene rubber (SBR).

SBR is not limited particularly, and for example, any of emulsion-polymerized styrene-butadiene rubber (E-SBR), solution-polymerized styrene-butadiene rubber (S-SBR) and the like can be used suitably.

A styrene content of SBR is preferably not less than 25% by mass, more preferably not less than 30% by mass. When the styrene content is less than 25% by mass, there is a tendency that sufficient grip performance cannot be obtained. In addition, the styrene content is preferably not more than 60% by mass, more preferably not more than 50% by mass. When the styrene content exceeds 60% by mass, there is a tendency that not only abrasion resistance is lowered but also temperature dependency of the performances is increased and the performances can be changed largely with respect to a temperature change.

A SBR content in the rubber component is not less than 60% by mass, preferably not less than 80% by mass, further preferably not less than 90% by mass. When the content is less than 60% by mass, there is a tendency that sufficient grip performance cannot be obtained. Meanwhile, an upper limit of the content is not limited particularly, and may be 100% by mass.

The rubber components other than SBR which can be used in the present invention are not limited particularly, and examples thereof include diene rubbers such as natural rubber (NR), isoprene rubber (IR), butadiene rubber (BR), styrene-isoprene-butadiene rubber (SIBR), ethylene-propylene-diene rubber (EPDM), chloroprene rubber (CR), acrylonitrile-butadiene rubber (NBR), and butyl rubber (IIR). These rubbers other than SBR may be used alone or may be used in combination of two or more thereof.

(Partially hydrogenated phenolic resin)

In the rubber composition of the present invention, a blending amount of the partially hydrogenated phenolic resin is preferably from 1 to 100 parts by mass based on 100 parts by mass of the rubber component. When the blending amount is less than 1 part by mass, abrasion resistance tends to be lowered, and when exceeding 100 parts by mass, there is a tendency that sufficient grip performance cannot be obtained. The blending amount is preferably not less than 3 parts by mass, more preferably not less than 5 parts by mass, further preferably not less than 10 parts by mass, further

preferably not less than 20 parts by mass. Further the blending amount is preferably not more than 90 parts by mass, more preferably not more than 80 parts by mass, further preferably not more than 50 parts by mass, further preferably not more than 40 parts by mass.

(Filler)

Examples of the filler include carbon black, silica, and the like which are commonly used in this field.

Carbon blacks which are used generally in production of tires can be used, and examples thereof include SAF, ISAF, HAF, FF, FEF, GPF, and the like. Specifically there are exemplified SHOBLACK N220 (available from Cabot Japan K.K.), ASAHI #78 (available from ASAHI CARBON CO., LTD.), and the like. Carbon blacks can be used alone or can be used in combination of two or more thereof.

The nitrogen adsorption specific surface area ($N_2SA$) of carbon black is preferably not less than 70 $m^2/g$, more preferably not less than 100 $m^2/g$. When $N_2SA$ is less than 70 $m^2/g$, grip performance tends to be lowered. On the other hand, $N_2SA$ is preferably not more than 600 $m^2/g$, more preferably not more than 570 $m^2/g$. When $N_2SA$ of carbon black is more than 600 $m^2/g$, there is a tendency that sufficient dispersibility of carbon black is difficult to obtain and abrasion resistance is lowered. $N_2SA$ of carbon black is determined in accordance with JIS K6217-2: 2001.

Any of silica used usually in this field can be used suitably, and examples thereof include silica (anhydrous silica) prepared by a dry method, silica (hydrous silica) prepared by a wet method, and the like.

A blending amount of the filler is preferably not more than 150 parts by mass, more preferably not more than 100 parts by mass based on 100 parts by mass of rubber component. When the blending amount exceeds 150 parts by mass, properties such as tensile strength tend to be lowered. On the other hand, a lower limit of the blending amount is preferably not less than 30 parts by mass, more preferably not less than 40 parts by mass. When the blending amount is less than 30 parts by mass, properties such as abrasion resistance tend to be lowered.

The fillers can be used alone or can be used in combination of two or more thereof.

(Silane coupling agent)

The rubber composition of the present invention can comprise a silane coupling agent. Any of known silane coupling agents can be used as a silane coupling agent. For example, there can be used suitably sulfide silane coupling agents such as bis(3-triethoxysilylpropyl)tetrasulfide; mercapto silane coupling agents such as 3-mercaptopropyltrimethoxysilane; vinyl silane coupling agents such as vinyltriethoxysilane; amino silane coupling agents such as 3-aminopropyltriethoxysilane; glycidoxy silane coupling agents such as γ-glycidoxypropyltriethoxysilane; nitro silane coupling agents such as 3-nitropropyltrimethoxysilane; and chloro silane coupling agents such as 3-chloropropyltrimethoxysilane. These silane coupling agents may be used alone, or may be used in combination of two or more thereof.

When the silane coupling agent is contained, a blending amount thereof is preferably not less than 5 parts by mass, more preferably not less than 7 parts by mass based on 100 parts by mass of the silica. When the amount of silane coupling agent is less than 5 parts by mass, dispersibility of silica tends not to be sufficiently improved. The amount of silane coupling agent is preferably not more than 20 parts by mass, more preferably not more than 15 parts by mass. When the amount of silane coupling agent exceeds 20 parts by mass, there is a tendency that a sufficient coupling effect cannot be obtained and reinforcing property is degraded.

(Other compounding agents)

In addition to the above-mentioned components, compounding agents which have been used in the field of rubber industry, for example, an antioxidant, an oil, a wax, zinc oxide, a vulcanizing agent such as sulfur, a vulcanization accelerator, and the like can be properly blended to the rubber composition of the present invention.

(Preparation of rubber composition)

In the present invention, with respect to each compounding agent, firstly after those except sulfur and a vulcanization accelerator are subjected to kneading in a Banbury mixer, sulfur and a vulcanization accelerator are added to a kneaded product, followed by further kneading using an open roll, thereby allowing an unvulcanized rubber composition to be prepared.

(Production of pneumatic tire)

The rubber composition of the present invention can be used, for example, for production of tires. In this case, production of tires can be carried out by a usual method. Namely, the unvulcanized rubber composition is subjected to

extrusion processing to a shape of a specific member of a tire and then, according to necessity, molding together with other tire members on a tire molding machine, thus forming an unvulcanized tire. A tire can be obtained by heating and compressing this unvulcanized tire in a vulcanizer, and by introducing air in the tire, a pneumatic tire can be obtained.

(Application)

The thus obtained rubber composition of the present invention can be used suitably for tires, especially for tires for vehicles, in particular, for a tire tread since both of grip performance and abrasion resistance can be improved.

While not wishing to be bound by theory, it is believed, as a possible mechanism for excellent grip performance and abrasion resistance when "the specific partially hydrogenated phenolic resin" prepared by selectively hydrogenating double bonds other than those on aromatic rings of the phenolic resin is used for a rubber composition for tires in the present invention, that the double bonds other than those on aromatic rings decrease or disappear by the selective hydrogenation and crosslinking failure can be prevented, thereby various physical properties, in particular, abrasion resistance can be improved and that the aromatic ring is not hydrogenated and tackiness of the resin is kept, thereby grip performance is not lowered.

EXAMPLE

The present invention is explained by means of Examples, but is not limited to the Examples.

Various chemicals used for synthesis of partially hydrogenated phenolic resins and for preparation of rubber compositions in Examples and Comparative Examples are collectively shown below. The various chemicals were subjected to purification according to necessity by a usual method.

<Various chemicals used for synthesis of partially hydrogenated phenolic resins>

Cyclohexane: Cyclohexane available from Kanto Chemical Industry Co., Ltd.
Tetrahydrofuran (THF): Tetrahydrofuran available from Kanto Chemical Industry Co., Ltd.
10% Palladium carbon: 10% Palladium carbon available from TOKYO CHEMICAL INDUSTRY CO., LTD.

<Various chemicals used for preparation of rubber compositions>

SBR: Tufdene 4850 available from Asahi Kasei Chemicals Corporation (S-SBR: containing 50% oil to 100 g of SBR solid content, styrene content: 39% by mass)
Resin A: KORESIN (hydrogenation ratio: 0%, softening point: 140±10°C, hydroxyl value: 320 mgKOH/g, available from BASF)
Resin B: YS Resin TO125 (hydrogenation ratio: 0%, softening point: 125±5°C, hydroxyl value: 0 mgKOH/g, available from YASUHARA CHEMICAL CO., LTD.)
Resin C: YS Polyster G125 (hydrogenation ratio: 0%, softening point: 125±5°C, hydroxyl value: 140 mgKOH/g, available from YASUHARA CHEMICAL CO., LTD.)
Resin D: YS Polyster K125 (hydrogenation ratio: 0%, softening point: 125±5°C, hydroxyl value: 200 mgKOH/g, available from YASUHARA CHEMICAL CO., LTD.)
Resin E: YS Polyster UH 115 (hydrogenation ratio: 80%, softening point: 115±5°C, hydroxyl value: 20 mgKOH/g, available from YASUHARA CHEMICAL CO., LTD.)
Resins F to I: prepared as described herein
Carbon black: SHOBLACK N220 (Nitrogen adsorption specific surface area ($N_2SA$): 125 $m^2/g$) available from Cabot Japan K.K.
Antioxidant: NOCRAC 6C (N-1,3-dimethylbutyl-N'-phenyl-p-phenylenediamine) available from Ouchi Shinko Chemical Industrial Co., Ltd.
Stearic acid: Stearic acid available from NOF CORPORATION
Zinc oxide: ZINC FLOWER No.1 available from Mitsui Mining & Smelting Co., Ltd.
Sulfur: Powdered sulfur available from Tsurumi Chemical Industry Co., Ltd.
Vulcanization accelerator: NOCCELER CZ (N-cyclohexyl-2-benzothiazolylsulfenamide) available from Ouchi Shinko Chemical Industrial Co., Ltd.

<Synthesis of partially hydrogenated phenolic resins>

PREPARATION EXAMPLE 1

(Preparation of Resin F)

Into a 3-liter autoclave with a stirring blade having been subjected to replacement with nitrogen sufficiently, 1 liter of cyclohexane, 1 liter of tetrahydrofuran (THF), 200 g of resin (Resin A) as a starting material, and 10 g of 10% palladium carbon were added. The atmosphere of the autoclave was replaced with nitrogen and, then, further replaced with hydrogen so as to bring the pressure to 5.0 kg/cm$^2$, and the mixture was subjected to a catalytic hydrogenation reaction at 80°C for 3 hours to obtain Resin F. The yield was nearly 100%.

Hydrogenation ratio of double bonds other than those on aromatic rings of Resin F was calculated from reduction of spectrum corresponding to unsaturated bonds other than those on aromatic rings by adding the resin (Resin A before the hydrogenation or Resin F after the hydrogenation) to carbon tetrachloride as a solvent in a concentration of 15% by mass and setting the mixture to a proton NMR of 100 MHz (hereinafter the same in the measurement of the hydrogenation ratio). As a result, the hydrogenation ratio of double bonds other than those on aromatic rings of Resin F was nearly 100%. The hydroxyl value (OH value) of Resin F was 318 mgKOH/g. The softening point of Resin F was 147°C.

PREPARATION EXAMPLE 2

(Preparation of Resin G)

Processing was carried out in the same manner as in Preparation Example 1 except that the resin as a starting material was changed to Resin C, to obtain Resin G. The yield was nearly 100%. The hydrogenation ratio of double bonds other than those on aromatic rings of Resin G was nearly 100%. The hydroxyl value was 142 mgKOH/g. The softening point of Resin G was 132°C.

PREPARATION EXAMPLE 3

(Preparation of Resin H)

Processing was carried out in the same manner as in Preparation Example 1 except that the resin as a starting material was changed to Resin D, to obtain Resin H. The yield was nearly 100%. The hydrogenation ratio of double bonds other than those on aromatic rings of Resin H was nearly 100%. The hydroxyl value was 198 mgKOH/g. The softening point of Resin H was 134°C.

PREPARATION EXAMPLE 4

(Preparation of Resin I)

Processing was carried out in the same manner as in Preparation Example 1 using Resin A as a starting material except that the reaction time of the catalytic hydrogenation reaction was changed to one hour, to obtain Resin I. The yield was nearly 100%. The hydrogenation ratio of double bonds other than those on aromatic rings of Resin I was nearly 50%. The hydroxyl value was 322 mgKOH/g. The softening point of Resin I was 142°C.

<Preparation of rubber compositions, tires, etc.>

(Unvulcanized rubber compositions)

Various chemicals in accordance with the formulation shown in Table 1 except sulfur and the vulcanization accelerator were kneaded at 150°C for five minutes in a Banbury mixer, and a kneaded product was obtained. Sulfur and the vulcanization accelerator were added to the obtained kneaded product, followed by 12-minute kneading at 170°C using an open roll to obtain Unvulcanized Rubber Compositions of each Example and Comparative Example.

(Pneumatic tires)

Each of the obtained unvulcanized rubber compositions was subjected to extrusion processing to a shape of a tire tread and molding together with other tire members on a tire molding machine, thus forming an unvulcanized tire.

A tire for a cart (tire size: 11×7.10-5) was obtained by press vulcanization of this unvulcanized tire at 170°C for 20 minutes in a vulcanizer, and by introducing air in the tire, a pneumatic tire was obtained.

(Vulcanized rubber samples)

Each of the obtained unvulcanized rubber compositions was subjected to molding to a specified shape and press vulcanization in the same manner as above to properly obtain each vulcanized rubber sample for testing.

<Evaluation>

With respect to the obtained vulcanized rubber samples and pneumatic tires, crosslinking degree (SWELL index), tensile strength, grip performance and abrasion resistance were evaluated by the following methods. The results are shown in Table 1.

(Index of crosslinking degree (SWELL index))

A vulcanized rubber sheet (a test piece of length (2 mm) x width (2 mm) x height (2 mm)) was dipped in toluene at 25°C for 24 hours, and a volume change (SWELL) between before and after the dipping was measured and was converted, using the following equation, to an index assuming that the index of crosslinking degree of Comparative Example 1 was 100. The smaller the index of crosslinking degree is, the more the crosslinking failure hardly occurs, which indicates that crosslinking has been achieved more uniformly.

$$\text{(Index of crosslinking degree)} = \{\text{(SWELL of each formulation)}/\text{(SWELL of Comparative Example 1)}\} \times 100$$

(Index of tensile strength)

According to JIS K 6251 "Vulcanized Rubber and Thermoplastic Rubber - Method of Obtaining Tensile Characteristics", tests were carried using a No.3 dumbbell type sample to measure a stress (M300) at 300% elongation. Each stress was converted, using the following equation, to an index assuming that the index of M300 of Comparative Example 1 was 100. The larger index of tensile strength shows the more improved abrasion resistance.

$$\text{(Index of tensile strength)} = \{\text{(M300 of each formulation)}/\text{(M300 of Comparative Example 1)}\} \times 100$$

(Index of grip performance)

Each of the obtained pneumatic tires was loaded on a cart, and the cart was run 12 rounds of a test course (2 km per 1 round) of an asphalt road. The 12 rounds were divided into three stages, i.e. the initial stage (1 to 4 rounds), the medium stage (5 to 8 rounds) and the latter stage (9 to 12 rounds), and stability control at steering was evaluated by a test driver in ten levels for the respective stages as an initial grip score, a medium grip score and a latter grip score. Each of an initial grip score, a medium grip score and a latter grip score were totalized and the totalized score was assumed to be a grip evaluation score. The obtained grip evaluation score was converted, using the following equation, to an index assuming that the index of grip performance of Comparative Example 1 was 100. It is indicated that the larger the index of grip performance is, the more superior the grip performance is.

$$\text{(Index of grip performance)} = \{\text{(Grip evaluation score of each formulation)}/\text{(Grip evaluation score of Comparative Example 1)}\} \times 100$$

(Index of abrasion resistance)

Test running was carried out 20 rounds of a test course using each pneumatic tire. A depth of a groove of the

tire before and after the running was measured, and the depth of a groove of each pneumatic tire was converted, using the following equation, to an index assuming that the abrasion resistance index of Comparative Example 1 is 100. It is indicated that the larger the abrasion resistance index is, the higher and the more superior the abrasion resistance is.

$$\text{(Index of abrasion resistance)} = \{\text{(Depth of groove of Comparative Example 1)}/\text{(Depth of groove of each formulation)}\} \times 100$$

TABLE 1

| | Comparative Example | | | | |
|---|---|---|---|---|---|
| | 1 | 2 | 3 | 4 | 5 |
| Formulation (part by mass) | | | | | |
| SBR | 150 | 150 | 150 | 150 | 150 |
| Resin A (hydrogenation ratio: 0, OH value: 320) | 30 | - | - | - | - |
| Resin B (hydrogenation ratio: 0, OH value: 0) | - | 30 | - | - | - |
| Resin C (hydrogenation ratio: 0, OH value: 140) | - | - | 30 | - | - |
| Resin D (hydrogenation ratio: 0, OH value: 200) | - | - | - | 30 | |
| Resin E (hydrogenation ratio: 80, OH value: 20) | - | - | - | - | 30 |
| Resin F (hydrogenation ratio: 100, OH value: 318) | - | - | - | - | - |
| Resin G (hydrogenation ratio: 100, OH value: 142) | - | - | - | - | - |
| Resin H (hydrogenation ratio: 100, OH value: 198) | - | - | - | - | - |
| Resin I (hydrogenation ratio: 50, OH value: 322) | - | - | - | - | - |
| Carbon black | 100 | 100 | 100 | 100 | 100 |
| Antioxidant | 2 | 2 | 2 | 2 | 2 |
| Stearic acid | 2 | 2 | 2 | 2 | 2 |
| Zinc oxide | 1.4 | 1.4 | 1.4 | 1.4 | 1.4 |
| Sulfur | 1 | 1 | 1 | 1 | 1 |
| Vulcanization accelerator | 4 | 4 | 4 | 4 | 4 |
| Results of evaluation | | | | | |
| Index of crosslinking degree | 100 | 121 | 124 | 134 | 76 |
| Index of tensile strength | 100 | 110 | 98 | 87 | 131 |
| Index of grip performance | 100 | 86 | 84 | 98 | 72 |
| Index of abrasion resistance | 100 | 90 | 86 | 72 | 136 |

- continued -

- continued -

| | Example | | | | | |
|---|---|---|---|---|---|---|
| | 1 | 2 | 3 | 4 | 5 | 6 |
| Formulation (part by mass) | | | | | | |
| SBR | 150 | 150 | 150 | 150 | 150 | 150 |
| Resin A (hydrogenation ratio: 0, OH value: 320) | - | - | - | - | - | - |
| Resin B (hydrogenation ratio: 0, OH value: 0) | - | - | - | - | - | - |
| Resin C (hydrogenation ratio: 0, OH value: 140) | - | - | - | - | - | - |
| Resin D (hydrogenation ratio: 0, OH value: 200) | - | - | - | - | - | - |
| Resin E (hydrogenation ratio: 80, OH value: 20) | - | - | - | - | - | - |
| Resin F (hydrogenation ratio: 100, OH value: 318) | 30 | - | - | - | 10 | 80 |
| Resin G (hydrogenation ratio: 100, OH value: 142) | - | 30 | - | - | - | - |
| Resin H (hydrogenation ratio: 100, OH value: 198) | - | - | 30 | - | - | - |
| Resin I (hydrogenation ratio: 50, OH value: 322) | - | - | - | 30 | - | - |
| Carbon black | 100 | 100 | 100 | 100 | 100 | 100 |
| Antioxidant | 2 | 2 | 2 | 2 | 2 | 2 |
| Stearic acid | 2 | 2 | 2 | 2 | 2 | 2 |
| Zinc oxide | 1.4 | 1.4 | 1.4 | 1.4 | 1.4 | 1.4 |
| Sulfur | 1 | 1 | 1 | 1 | 1 | 1 |
| Vulcanization accelerator | 4 | 4 | 4 | 4 | 4 | 4 |
| Results of evaluation | | | | | | |
| Index of crosslinking degree | 86 | 92 | 87 | 92 | 95 | 81 |
| Index of tensile strength | 122 | 125 | 120 | 112 | 114 | 102 |
| Index of grip performance | 138 | 130 | 136 | 133 | 115 | 102 |
| Index of abrasion resistance | 128 | 124 | 129 | 113 | 108 | 131 |

In Comparative Examples 1 to 4, where hydrogenation was not carried out, there are tendencies that the indexes of crosslinking degree are high (crosslinking failure occurred) and the indexes of tensile strength are low, and abrasion resistance is low. In Comparative Example 5, where the resin is a hydrogenated one, the index of crosslinking degree is low (crosslinking failure did not occur), the index of tensile strength is high and abrasion resistance is high, but grip performance is significantly low. Namely, in Comparative Examples 1 to 5, grip performance is not compatible with abrasion resistance. Meanwhile, in Examples 1 to 6, in which hydrogenation was carried out, the indexes of crosslinking degree are low (crosslinking failure did not occur), the indexes of tensile strength are improved as compared with the cases where hydrogenation was not carried out, and abrasion resistance is also improved. In addition, grip performance is also improved. Namely, grip performance is compatible with abrasion resistance.

According to the present invention, a novel partially hydrogenated phenolic resin, a rubber composition comprising the resin and exhibiting excellent grip performance and abrasion resistance, and a pneumatic tire produced using the rubber composition can be provided.

## Claims

1. A partially hydrogenated phenolic resin, said resin being prepared by selectively hydrogenating double bonds other than those on aromatic rings of a phenolic resin, and having a hydrogenation ratio of the double bonds other than those on aromatic rings of from 30 to 100% and a hydroxyl value of from 30 to 500 mgKOH/g.

2. The partially hydrogenated phenolic resin of claim 1, wherein the phenolic resin is a copolymer of (a) a phenolic compound and at least one of (b1) an acetylene hydrocarbon and (b2) a terpene compound.

3. A rubber composition comprising the partially hydrogenated phenolic resin of claim 1 or 2.

4. A rubber composition comprising 1 to 100 parts by mass of the partially hydrogenated phenolic resin of claim 1 or 2 based on 100 parts by mass of a diene rubber component comprising not less than 60% by mass of a styrene-butadiene rubber.

5. The rubber composition of claim 4, further comprising 30 to 150 parts by mass of a carbon black.

6. A tire having a tire tread produced using the rubber composition of anyone of claims 3 to 5.

## Patentansprüche

1. Teilweise hydriertes Phenolharz, wobei das Harz durch selektives Hydrieren von Doppelbindungen hergestellt ist, die von denen an aromatischen Ringen eines Phenolharzes verschieden sind, und ein Hydrierungsverhältnis der Doppelbindungen, die von denen an aromatischen Ringen verschieden sind, von 30 bis 100% und einen Hydroxylwert von 30 bis 500 mgKOH/g aufweist.

2. Teilweise hydriertes Phenolharz nach Anspruch 1, wobei das Phenolharz ein Copolymer aus (a) einer phenolischen Verbindung und mindestens einem von (b1) einem Acetylenkohlenwasserstoff und (b2) einer Terpenverbindung ist.

3. Kautschukzusammensetzung, die das teilweise hydrierte Phenolharz nach Anspruch 1 oder 2 umfasst.

4. Kautschukzusammensetzung, umfassend 1 bis 100 Massenteile des teilweise hydrierten Phenolharzes nach Anspruch 1 oder 2, bezogen auf 100 Massenteile einer Dienkautschukkomponente, die nicht weniger als 60 Massen-% eines Styrol-Butadien-Kautschuks umfasst.

5. Kautschukzusammensetzung nach Anspruch 4, die ferner 30 bis 150 Massenteile eines Rußes umfasst.

6. Reifen mit einer Reifenlauffläche, die unter Verwendung der Kautschukzusammensetzung nach einem der Ansprüche 3 bis 5 hergestellt ist.

## Revendications

1. Résine phénolique partiellement hydrogénée, ladite résine étant préparée par hydrogénation sélective des doubles liaisons autres que celles sur les cycles aromatiques d'une résine phénolique, et ayant un rapport d'hydrogénation des doubles liaisons autres que celles sur les cycles aromatiques allant de 30 à 100 %, et une valeur hydroxyle allant de 30 à 500 mgKOH/g.

2. Résine phénolique partiellement hydrogénée selon la revendication 1, dans laquelle la résine phénolique est un copolymère de (a) un composé phénolique et de l'un au moins de (b1) un hydrocarbure de type acétylène et (b2) un composé terpène.

3. Composition de caoutchouc comprenant la résine phénolique partiellement hydrogénée de la revendication 1 ou 2.

4. Composition de caoutchouc comprenant de 1 à 100 parties en masse de la résine phénolique partiellement hydrogénée de la revendication 1 ou 2, sur la base de 100 parties en masse d'un composant caoutchouc diène qui ne comprend pas moins de 60 parties en masse d'un caoutchouc styrène-butadiène.

5. Composition de caoutchouc selon la revendication 4, comprenant en outre de 30 à 150 parties en masse de noir de carbone.

6. Pneumatique ayant une bande de roulement produite en utilisant la composition de caoutchouc selon l'une quelconque des revendications 3 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005248056 A
- WO 2013105455 A1
- JP 2008174696 A